Europäisches Patentamt

European Patent Office

Office européen des brevets

(11) Publication number: **0 267 663**
**A2**

## EUROPEAN PATENT APPLICATION

(21) Application number: 87304354.1

(51) Int. Cl.⁴: **G01G 23/37** , G01G 19/32

(22) Date of filing: 15.05.87

(30) Priority: 14.11.86 US 931219

(43) Date of publication of application:
18.05.88 Bulletin 88/20

(84) Designated Contracting States:
DE FR GB IT

(71) Applicant: ISHIDA SCALES MFG. CO. LTD.
44, Shogoin Sannou-cho Sakyo-ku
Kyoto-shi Kyoto(JP)

(72) Inventor: Kono, Katsuaki
6-8-108 Honmaru-cho
Otsu-shi Shiqa-ken(JP)
Inventor: Nishimura, Ryoki
507 Mizuho-cho
Moriyama-shi Shiga-ken(JP)

(74) Representative: Cross, Rupert Edward Blount
et al
BOULT, WADE & TENNANT 27 Furnival Street
London EC4A 1PQ(GB)

(54) Weighing system.

(57) A weighing system includes a weighing device
and a computer which follows an operating system
program, reading out a processing program from a
memory device, storing it in a read-write memory
and running the program from the read-write mem-
ory to control the weighing device.

FIG.-5

## WEIGHING SYSTEM

This invention relates to a weighing system.

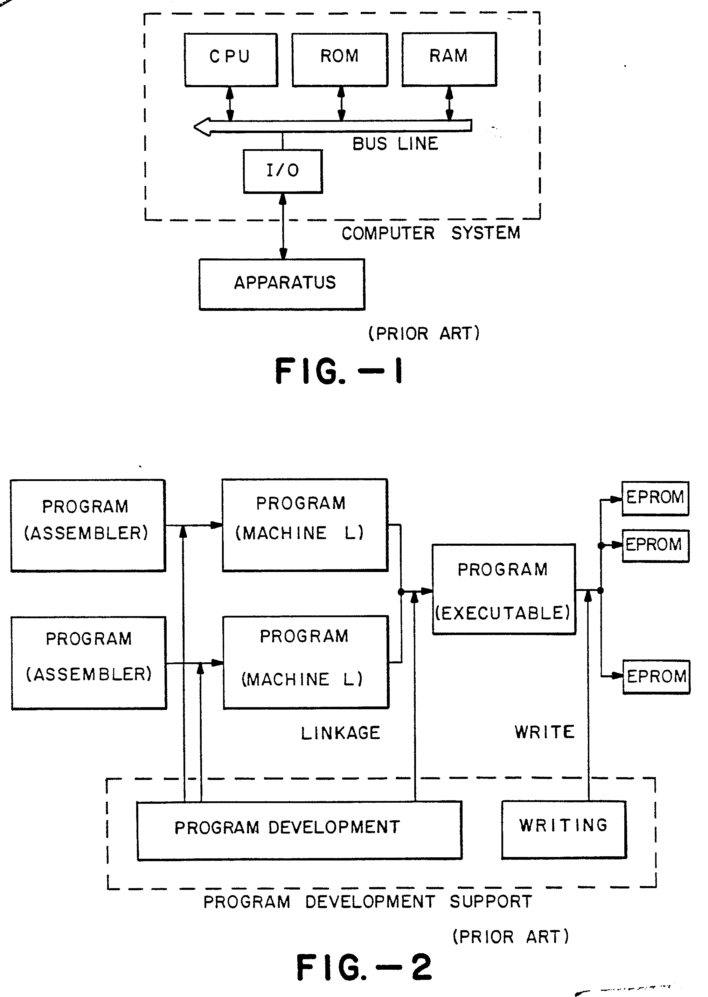

Many types of computer-controlled automatic weighing systems, including combinational weighing systems, have been developed manufactured and sold. The computer system of a conventional weighing system includes a central processing unit (CPU), read-only memory (ROM), and random access memory (RAM) and controls the mechanical operations through an input/output interface (I/0) as schematically illustrated in Fig. 1 of the drawings. The control procedures are stored in the ROM and the CPU controls the operation by reading the contents of the ROM. Such procedures, or programs, may be created as shown in Fig. 2 of the drawings, initially written in assembler language, then translated into machine language, then linked to form an executable program and then recorded in devices such as erasable programmable ROMs (EPROM). Although programs are frequently written in high level language nowadays, the basic procedure is still as shown in Fig. 2, and EPROMs are usually used for storage. In general, programs are too long to be stored in one EPROM. Several EPROMs may be used together to store one program. After a program is thus recorded in one or more EPROMs it can no longer be modified while the apparatus is in operation. The RAM is for temporarily strong data such as conditions needed for the operation of the apparatus and is not for storing control procedures.

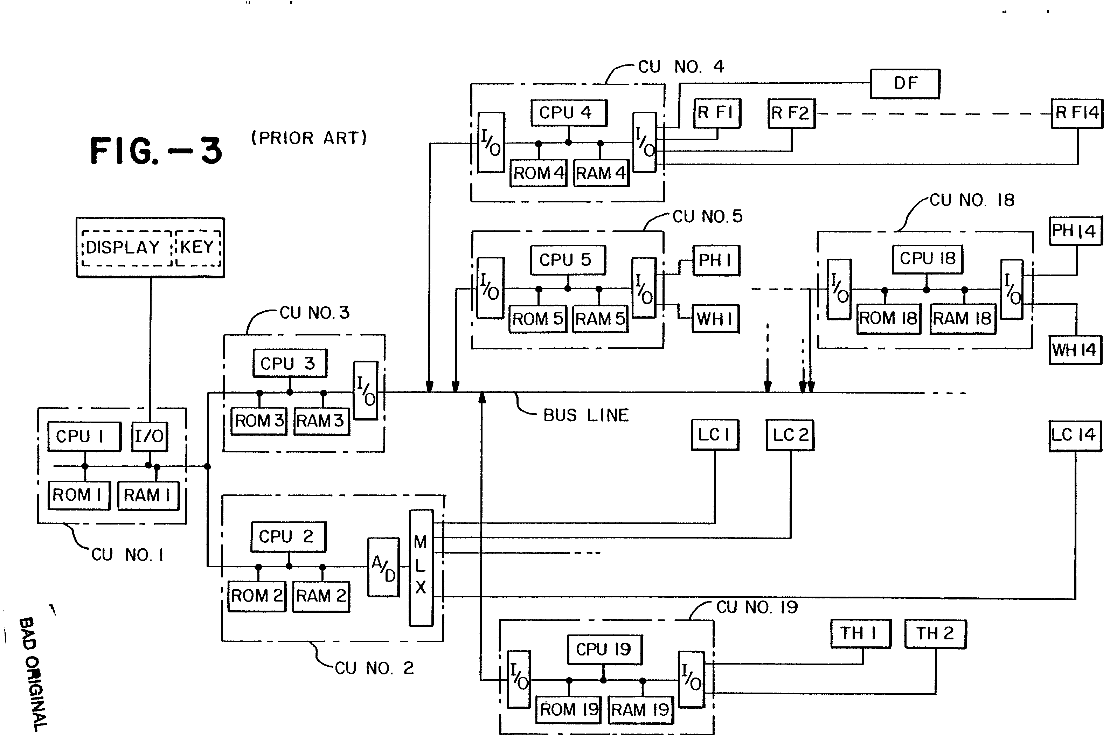

The control unit of a combinational weighing system with the aforementioned conventional type of computer systems is illustrated in Fig. 3 of the drawings by way of a block diagram. The combinational weighing system controlled by this unit is of the type described in EP-A-0180429 with 14 article batch handling units arrayed radially in a circular formation, each provided with a radial feeder (RF) for receiving articles to be weighed from a centrally located dispersion feeder (DF), a pool hopper (PH) for receiving an article batch and temporarily holding it and a weigh hopper (WH) for receiving the article batch from the pool hopper to weigh it by a load cell (LC) and discharging it in response to a discharge signal. The radical feeder, load cell and hoppers associated with the ith article batch handling units (i = 1-14) will be donoted by a subscript i.

The control unit shown in Fig. 3 is characterized as having many computer units (CU) to excute various functions of combinational weighing. The first computer unit (CU No. 1) generally serves to perform combinational calculations and is frequently referred to as the main computer unit. The second computer unit (CU No. 2) serves to monitor the weight signals received from the load cells and the third computer unit (CU No. 3) is for controlling the motion of the hoppers and feeders. They are both connected to the first computer unit (CU NO. 1) which not only calculates combinations of weight values but selects a combination according to a predefined criterion. A data entry unit (DEU) with a display screen and key input means is connected to the first computer unit (CU No. 1). Each article batch handling unit is provided with its own computer unit (CU No. 5 through CU No. 18) to control the motion of its pool hopper and weigh hopper. The fourth computer unit (CU No. 4) serves to control the vibratory motions (amplitude and timing) of the radial feeders and the dispersion feeder. The discharge unit disposed below the article batch handling units is provided with two timing hoppers (TH1 and TH2) to control the flow of the discharged article batches to packaging means. The motion of these timing hoppers is controlled by the nineteenth computer unit (CU No. 19). As shown in Fig. 3 and explained by way of Fig. 1 above, each of these computer units includes a CPU and a program (stored in ROM) for its operation. As explained above, RAMs are for temporarily storing data such as the target weight value which are necessary for the execution of the system operation As stated above, RAMs do not store any program.

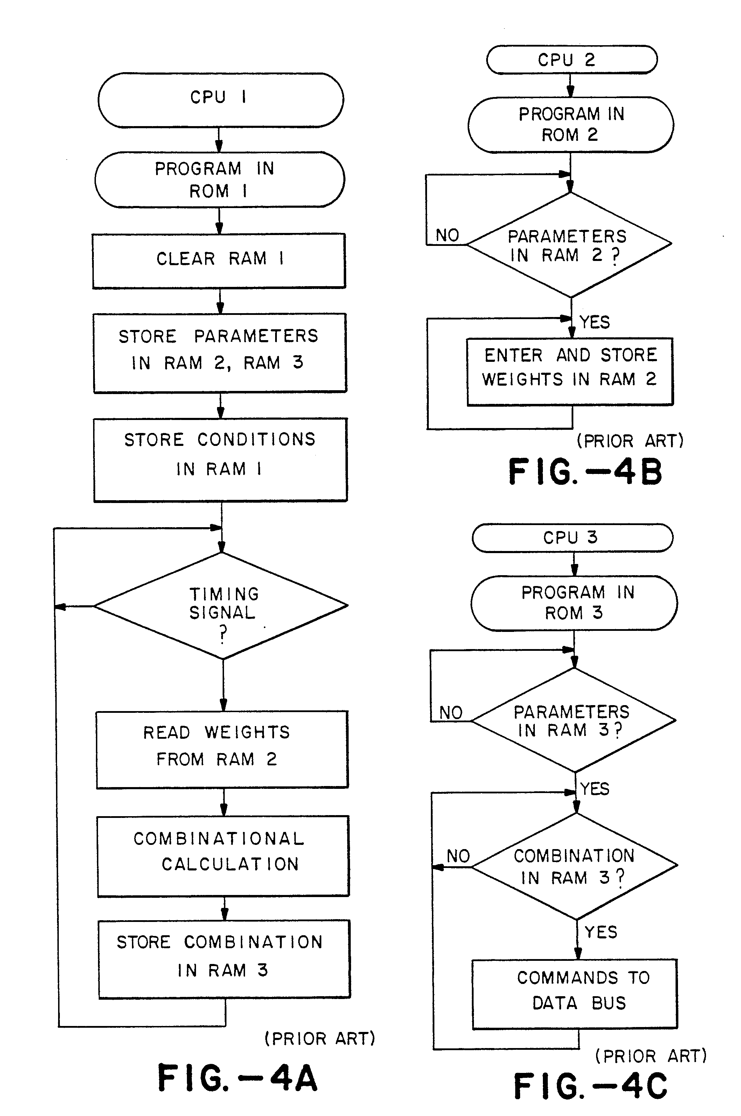

Figs. 4(A), (B) and (C) are flow charts for some of the CPUs shown in Fig. 3. With reference firstly to Fig. 4(A) which is a flow chart for the CPU in the first computer unit (CPU1), this computer begins to follow the program stored in ROM1 when power is switched on, clearing RAM1, storing in RAM2 and RAM3 parameters related to motion such as the timing for opening and closing hopper gates, storing in RAM1 parameters related to weighing such as the target weight value entered through the data entry unit DEU, and performing combinational calculation by receiving weight values from RAM2 every time there is a timing signal from a packaging unit connected to the discharge unit. It is to be noted that the computer CPU1 in the first computer unit CU No. 1 executes nothing but the program stored in ROM1 and that this program cannot be modified (rewritten) while it is being executed.

Similar observations may be made regarding the other computers shown in Fig. 3. The computer (CPU 2) in the second computer unit (CU No. 2) is programmed to execute only the program shown in Fig. 4(B), checking whether necessary parameters are entered in RAM2, and sequentially (through a multiplexer MLX shown in Fig. 3) entering weight signals from the load cells. The computer (CPU3) in the third computer unit (CU No. 3) is similarly programmed to execute only the program shown in Fig. 4(C), checking whether necessary parameters are entered in RAM3 and, if a combination has been selected and entered in RAM3, transmitting signals to operate selected feeders and hopper gates to a data bus.

In other words, if the user wishes to modify even a small part of the operations or part of the electrical circuitry of such a prior art weighing system, it turns out to be a formidably complicated matter because the programs for the individual units are intimately related to one anther. Even a small change in one of them may affect a large number of other programs and all affected programs will have to be rewritten. Moreover, as indicated in Fig. 2, each rewritten program must be translated into machine language and the programs in machine language must be written into the ROM to replace the old programs. When a new combinational weighing system is developed with different hardware including circuits, all programs must be rewritten. This is so even if the new system uses the same algorithm, say, for combinational calculation because the hardware is different. To be more specific, programs directly dependent on hardware and programs not directly related to hardware are generally mixed together in a conventional system such that it is necessary to rewrite all programs if different hardware is to be used. In order to rewrite all programs for a system, therefore, the programmer would be required to be throughly familiar with the hardware and software of the new system.

According to this invention there is provided a weighing system comprising a plurality of weighing devices, characterised by a plurality of computer units respectively associated with said weighing devices, each of said computer units including a central processing unit, read-only memory means and read-write memory means, said read-only memory means containing an operating system program which causes said central processing unit to receive and store in said read-write memory means processing programs and parameters and to control corresponding ones of said weighing devices by carrying out said processing programs with said parameters.

The invention provides a computer-controlled weighing system for which the programs can be easily developed and modified, and which can be operated in different modes simply by exchanging programs.

This invention will now be described by way of example with reference to the drawings, in which:-

Fig. 1 is a block diagram of a computer system of a known weighing system;

Fig. 2 is a schematic diagram showing the process of program development in the system of Fig. 1;

Fig. 3 is a block diagram of a control unit of a known combinational weighing system;

Figs. 4(A), (B) and (C) are flow charts for the operation of computers shown in Fig. 3;

Fig. 5 is a block diagram of a computer system for a weighing system according to the invention;

Fig. 6 is a block diagram of a control system of a combinational weighing system according to the invention;

Figs. 7 through 9 are flow charts for the operation of computer units shown in Fig. 6;

Fig. 10 is a block diagram of a weighing system according to the invention, connected to a communication line;

Fig. 11 is a block diagram of an electronic scales system according to the present invention connected to a communication line;

Fig. 12 is a schematic drawing of the hierarchical structure of an operating system;

Fig. 13 is a more detailed block diagram of one of the computer units of Fig. 6;

Figs. 14(A) and (B) are pulse diagrams illustrating opertion of the unit of Fig. 13;

Fig. 15 is a detailed flow chart showing one of the steps in the flow chart in Fig. 9; and

Fig. 16 is an example of an interrupt table.

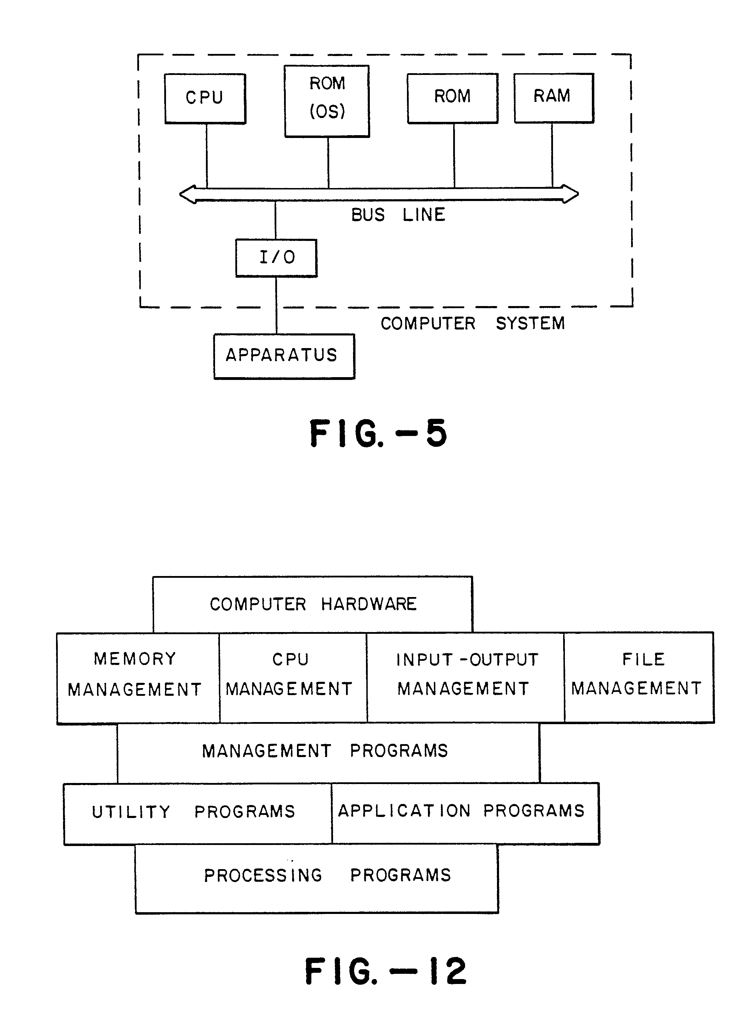

Referring to Fig. 5, this shows a system according to the present invention having a ROM for storing programs for an operating system (ROM (OS)). Programs which are necessary for operating a system are stored in the ROM as in the case of prior art system shown in Fig. 1. When operation is started, however, a program stored in ROM (OS) for the operating system incorporated in this computer unit causes the operation programs in the ROM to be transferred to the RAM and the CPU controls the apparatus by reading a program which is now found in the RAM, not from the ROM. An operation of this type is generally referred to as "bootstrap". Although seimi-conductor elements like EPROM had to be used for the ROM of Fig. 1, there is no such limitation in the system of Fig. 5. Use may be made of any memory element or device from which stored contents are not easily erased when power is switched off. Representative examples of such elements and devices include external memory devices such as hard and floppy disks as well as IC and memory cards with battery backup, magnetic bubble memories and optical memories.

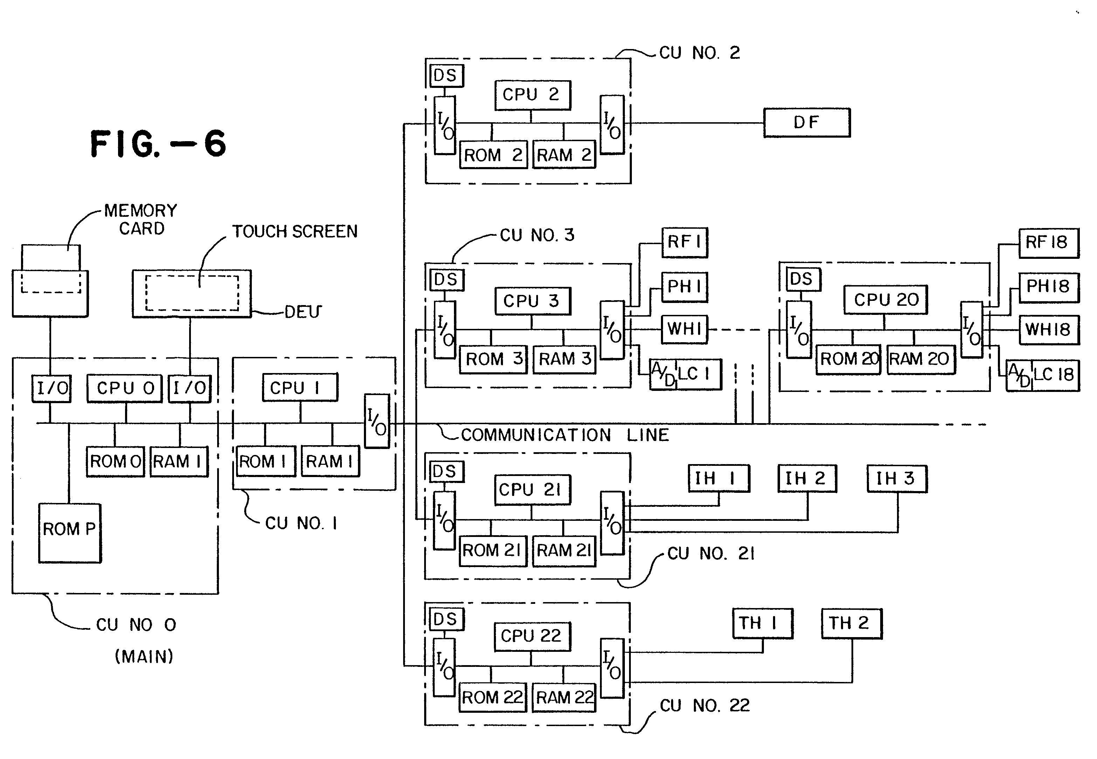

Fig. 6 is a block diagram of a combinational weighing system embodying the present invention with eighteen article batch handling units arrayed radially in a circular formation as described in EP-A-0219347.

Symbols used in Fig. 6 have generally the same meaning as explained in connection with Fig. 3. The discharge unit of this system includes three intermediate hoppers (IH1, IH2, and IH3) in addition to the two timing hoppers TH1 and Th2 for efficiency.

The control unit illustrated in Fig. 6 incorporats an operating system such that the ROMs associated with its many computer units (CUs) contain programs for this operating system and that their RAMs store not only data but also programs as will be explained in detail below. As briefly mentioned in connection with Fig. 5 above, the main computer unit (CU No. 0) includes not only a CPU (CPUO), a program-storing ROM (ROMP) storing programs which are necessary for the system operation and a RAM (RAMO) but also another ROM (ROMO) for storing programs for the operating system. The computer CPUO of the main computer unit serves to control a card reader/writer (CR/W), a data entry unit (DEU) which may include a touch screen and the other computer units by transferring the programs in ROMP into RAMO and by referencing these transferred programs. The operating system program according to which the contents of ROMP are transferred to the RAMO is among the programs stored in ROMO. It is to be noted that the RAMO is used not only for storing data such as the target weight value as in the case of prior art control units but also a program for controlling computer operations.

The first computer unit (CU No. 1) serves to store the programs from ROMP in RAM1 and follows a stored program to modulate data and programs and transmit them through a communication line, to demodulate input signals therefrom and to store them as data in RAM1 or perform combinational calculation by using data stored in RAM1. ROM1 contains a program for the operating system by which programs are transferred from ROMP in the main computer unit to RAM1. It is to be noted that RAM1, too, is used not only for storing data but also programs transferred either from ROMP or a memory card through the card reader/writer CR/W.

The second computer unit (CU No. 2) serves to demodulate input signals from the communication line, to store them as a program in RAM2 and to control the dispersion feeder according to this program. The operating system program for executing the above is stored in ROM2. RAM2 stores not only commands and parameters transmitted from the first computer unit (CU No. 1) through the communication line, but also programs transmitted thereto. Symbols DS in Fig. 6 indicate a dip switch. Each dip switch has a number set therein, corresponding to the unit number of the computer unit to which it belongs. For example, "2" is set in the dip switch in the second computer unit. Although every signal transmitted from the first computer unit to the communication line is received by all computer units connected thereto, only those signals carrying the correct unit number are received by the intended computer unit. In other words, one of the functions of the CPUs in Fig. 6 is to compare a received unit number and its own unit number and to ignore the input if these two numbers do not match.

The third computer unit (CU No. 3) associated with one of the eighteen article batch handling units likewise serves to demodulate input signals from the communication line, to store them as a program in RAM3 and to control the radial feeder RF1, pool hopper PH1, weigh hopper WH1 and also the analog-to-digital converter inthe first article batch handling unit. The operating system program for executing the above is stored in ROM3. RAM3 stores not only commands and parameters from the communication line and weight data from the load cell LC1 and digitized by the analog-to-digital converter A/D but also programs that are transmitted through the communication line.

The fourth through twentieth computer units (CU Nos. 4-20) are structured and function similarly to the third computer unit. The 21st and 22nd computer units relate to the control of the intermediate hoppers and timing hoppers, respectively. They both demodulate input signals from the communication line and store them as programs in RAM21 and RAM22, respectively. In summary, the control unit of Fig. 6 reads out required programs from ROMP or a memory card, stores them in RAMs in the individual computer units and causes their CPUs to operate according to these programs stored in the RAMs. One of the advantages of the arrangement is that a different program can be read from ROMP or a memory card even while such programs in the RAMs are being executed such that the new program becomes stored in the RAMs in the individual computer units and executed. In what follows, operations of the individual computer units of Fig. 6 are explained by way of flow charts.

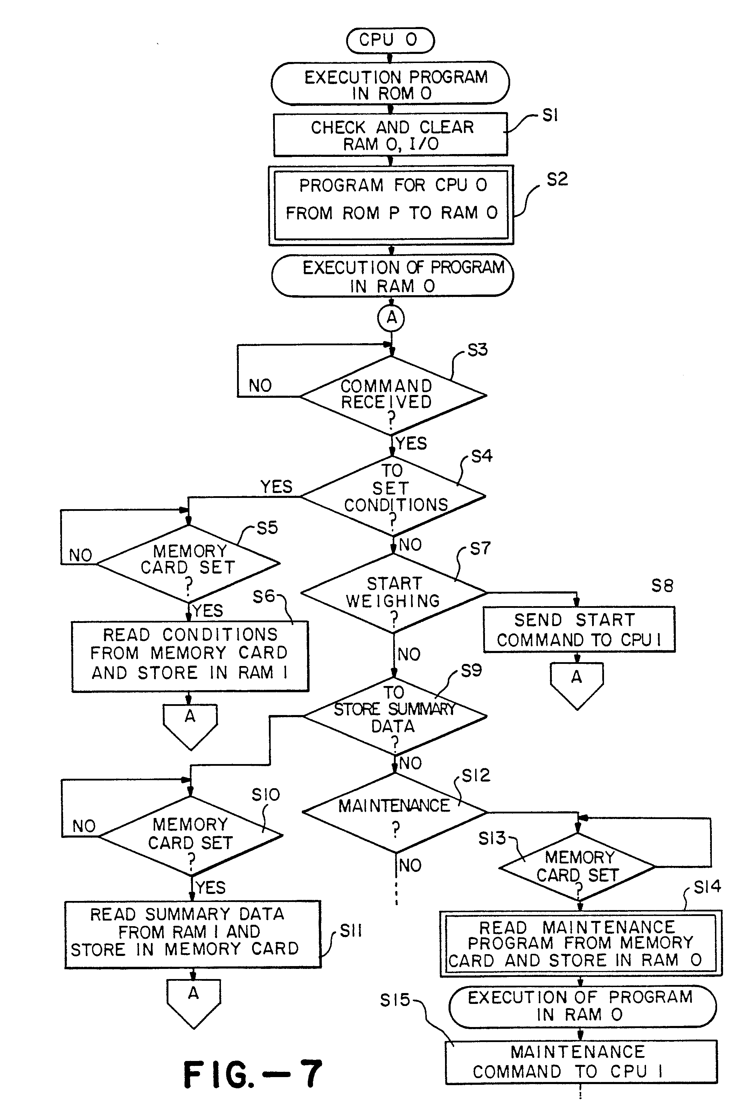

As shown in Fig. 7 which is a flow chart of the main computer unit CU No. 0 of Fig. 6, CPUO begins to execute the program stored in ROMO as soon as power is switched on. The program starts by checking whether RAMO and I/O operate normally. This is done, for example, by writing predefined data therein and reading them out to see whether they match. Thereafter, RAMO and I/O are cleared by way of initialization $(S_1)$. Next, programs necessary for CPUO are read out of ROMP and stored in RAMO. This causes CPUO to automatically start execution of these programs $(S_2)$.

Step $S_3$ represents the first step of the program stored in RAMO wherein it is examined whether any command has been received from the data entry unit. If the command is for entering conditions (such as the target weight value and upper limit) from a memory card (YES in $S_4$), it is examined whether a memory card has been set ($S_5$). If a menu card is set, conditions are read therefrom and stored in RAM1 of the first computer unit. If the command from the data entry unit is not for entering conditions but for starting combinational calculation (YES in $S_7$), this start command is transmitted to CPU1 of the first computer unit ($S_8$). If the answer in Step $S_7$ is NO, it is then examined whether the received command is for storing summary data (that is, discharge frequency, cumulative sum of the weights of discharged articles, etc. summarized by product categories) in a memory card. If so, and if a memory card is set (YES in $S_{10}$) such summary data are read from RAM1 and stored in the memory card ($S_{11}$). If the answer in Step $S_9$ is NO, it is examined whether the command is for reading a maintenance program out of a memory card ($S_{12}$). If so, and if a memory card is set (YES in $S_{13}$), a maintenance program is read from the memory card and stored in RAMO. This means that the program stored in RAMO in Step $S_2$ is replaced by a new program. Thereafter, CPUO executes the newly rewritten program by initially transmitting a maintenance command to CPU1 ($S_{15}$). By the maintenance program is meant a program which is used in the case of a trouble in the combinational weighing system. The program causes the system to execute certain operations so that the cause of the trouble can be detected. For example, the weigh hoppers may be caused to open and close sequentially and the user can determine if all weigh hoppers function normally.

One of the important features of the system to be noted in Fig. 7 is that programs are stored in RAMO from ROMP or a memory card and another feature to be noted is that no sooner is a program thus stored than is executed automatically.

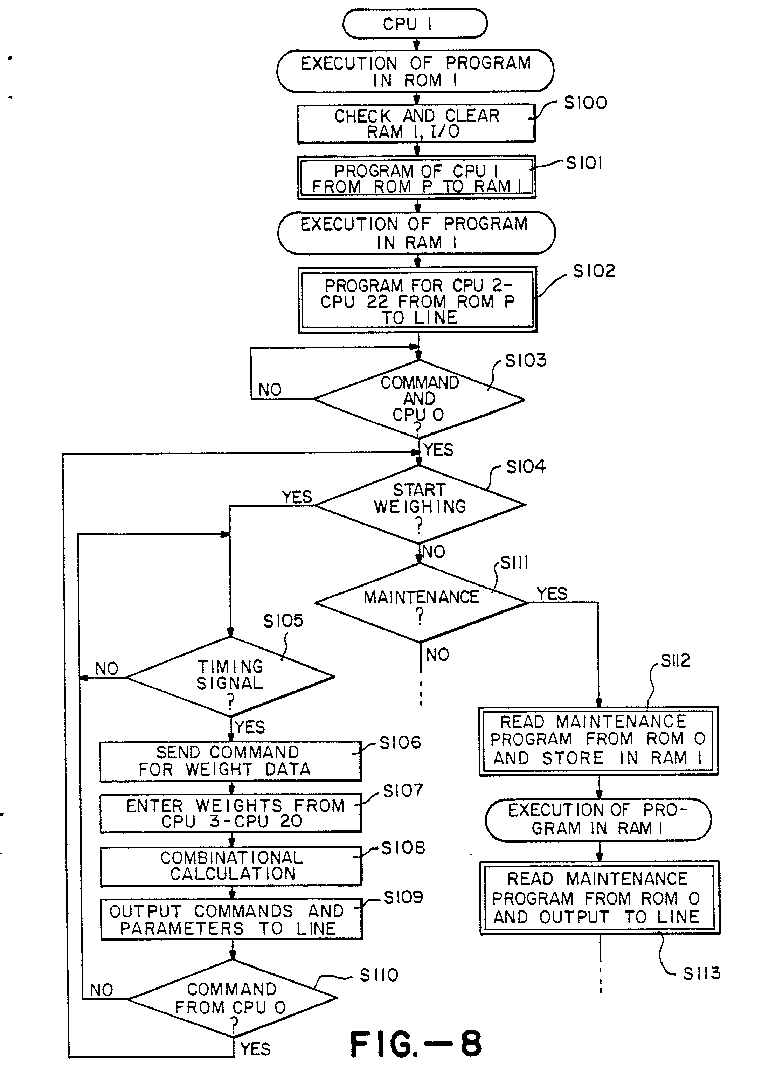

Fig. 8 is a flow chart for the first computer unit of Fig. 6. As soon as power is switched on, CPU1 in this computer unit begins to execute the program stored in ROM1 by checking and then clearing RAM1 and I/O ($S_{100}$) as done by CPUO. Thereafter, a program necessary for CPU1 is read from ROMP and stored in RAM1 ($S_{101}$). As soon as this is done, CPU1 automatically executes the stored program. Step $S_{102}$ represents the first step of the program in RAM1 and it is to read programs necessary for CPU2 - CPU22 of computer units Nos. 2-22 from ROMP and to transmit them to the communication line after modulating them into signals. CPU1 then waits until a command is entered from CPUO ($S_{103}$). If a command to start combinational weighing is received (YES in $S_{104}$), CPU1 waits until a timing signal is received from a packaging unit (not shown) connected to the discharge unit ($S_{105}$). When a timing signal is received, a command for weight data is transmitted through the communication line ($S_{106}$). Upon receiving this command, the computer units Nos. 3-20 transmit their weight data through the communication line and they are received by CPU1 ($S_{107}$) and used for combinational calculation ($S_{108}$) to determine a selected combination of article batch handling units to be discharged. Thereafter, a discharge command, the unit numbers of selected article batch handling units and operation parameters are trasmitted through the communication line ($S_{109}$). Steps $S_{105}$-$S_{110}$ are repeated every time a timing signal is received. If the answer in Step $S_{104}$ is NO but the command is for maintenance (YES in $S_{111}$), a maintenance program is read from RAMO and stored in RAM1 ($S_{112}$). CPU1 is thereby immediately caused to execute the stored program in RAM1, reading the program out of RAMO and transmitting it through the communication line as explained above in connection with Fig. 7 ($S_{113}$).

Important features of the system to be noted in the flow chart of Fig. 8 are that no sooner is a program stored in RAM1 (as in Steps $S_{101}$ and $S_{112}$) than is executed automatically and that programs are transmitted through a communication line (as in Steps $S_{102}$ and $S_{113}$).

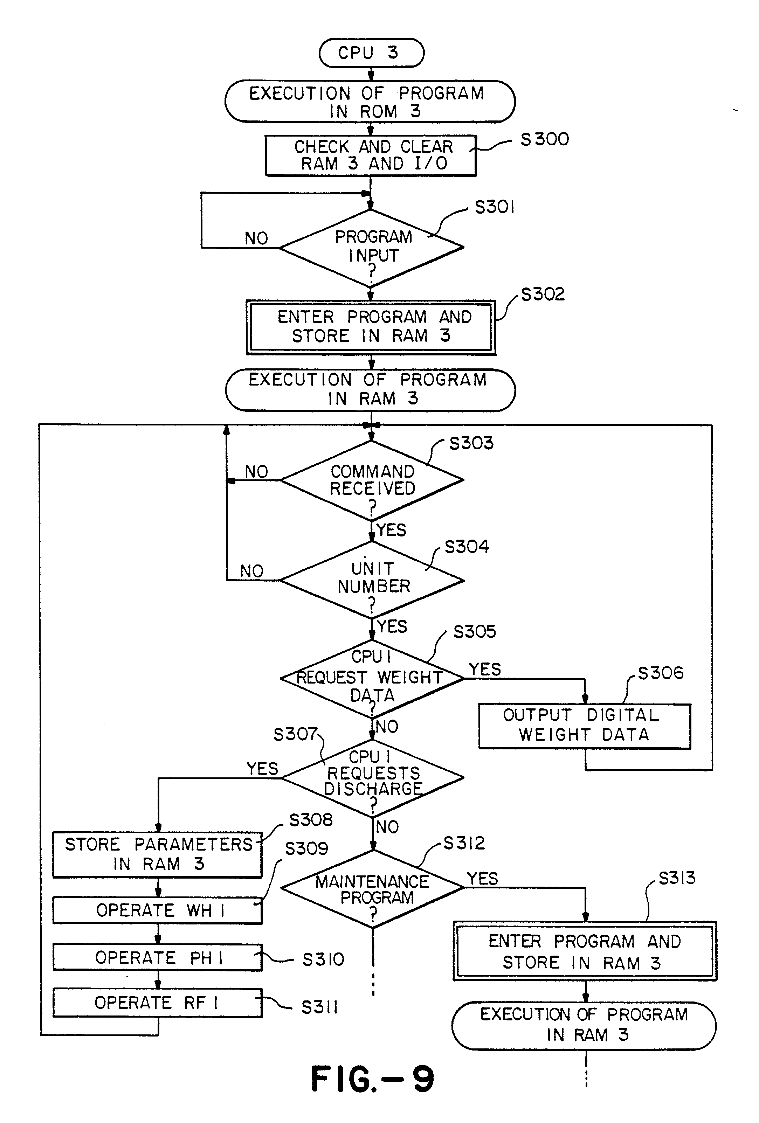

Fig. 9 is a flow chart for the third computer unit (CU No. 3) of Fig. 6 related to one of the eighteen article batch handling units. When power is switched on, CPU3 begins to execute the program stored in ROM3. After RAM3 and I/O are checked and cleared by way of initialization ($S_{300}$), if a program is entered from the communication line through the input-output interface (I/O) (YES in $S_{301}$), it is stored in RAM3 ($S_{302}$) and execution of this program thus stored in RAM3 is automatically started immediately. Thereafter, if a command is received through the interface (YES in $S_{303}$), the unit number received together with the command is examined to determine whether it is the same as the number set by the dip switch DS ($S_{304}$), or "3". If it is "3" and if the received command is from CPU1 requesting input of weight data (YES in $S_{305}$), CPU3 transmits an analog-to-digital converted weight signal indicative of the weight of the article batch in the associated weigh hopper WH1 ($S_{306}$). If the received command is from CPU1 but is for discharging the article batch (YES in $S_{307}$), the parameters related to the mechanical operation received together with the command and the unit number are stored in RAM3 ($S_{308}$) and CPU3 thereafter references these parameters thus stored in RAM3 to open and close the associated weigh hopper WH1 ($S_{309}$) and pool hopper PH1 ($S_{310}$) and to

control the vibratory motion of the associated radial feeder RF1 (S311). If the received command is for storing a maintenance program (YES in S312), the program which is transmitted subsequently is received and stored in RAM3 (S313). This automatically activates CPU3 into executing this program. One of the important features of the system to be noted in Fig. 9 is that no sooner is a program stored in RAM3 (as in Steps S302 and S313) than it is executed automatically.

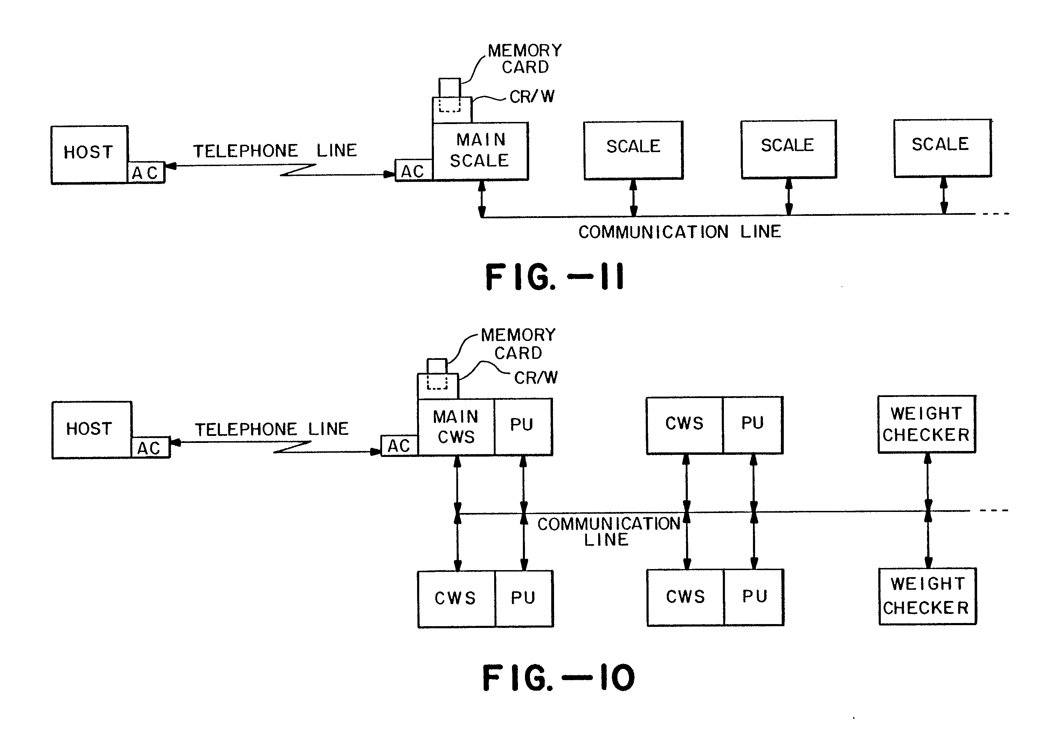

As described above, the system operates by reading a program from a memory, storing it in a read-write memory such as a RAM and operating the system by a computer by reading the program from the latter memory. This scheme can be applied in many other manners. Fig. 10 shows a system wherein a plurality of combinational weighing systems (CWS) each coupled with a packaging unit (PU) as well as weight checkers, etc. are connected to a communication line with one of the combinational weighing systems provided with a card reader/writer CR/W and serving as the control system (MAIN) to control the operation of all systems. Programs and parameters necessary for the operation of the connected systems may be entered from a memory card as explained above and the programs and parameters received by the control system through its card reader/writer CR/W transmitted to the individual systems through the communication line.

Alternatively, such programs and parameters may be received by the control system from a host computer (HOST) through a telephone line by means of acoustic couplers (AC) of a known type. For convenience, these two program transfer - schemes are illustrated together in Fig. 10. Fig. 11 shows a system wherein a plurality of electronic scales (of the kind which display the price to be paid on the basis of measured weight with unit price set initially) are connected to a communication line as in the previous embodiment shown in Fig. 10. Again, one of the scales may serve as the "main" scale, provided with a card reader/writer CR/W through which programs and parameters can be entered from a memory card. Alternatively, such programs and parameters may be communicated to the main scale from a host computer (HOST) through a telephone wire by means of acoustic couplers AC. In either situation, the control unit of the main scale serves to communicate the received programs and parameters to the other scales connected to the communication line.

The invention can operate by separately storing programs which are directly related to the hardware of the apparatus to be controlled and programs which are not directly so related. With reference to the hierarchical structure of an operating system shown in Fig. 12, it can be seen that a change in a portion of the hardware will not necessitate a change in the application program. Programs directly related to input and output are separated from programs of other types when they are stored according to the present invention. In this manner, only the directly related programs will have to be changed when a change is effected in the hardware and the other programs can remain the same.

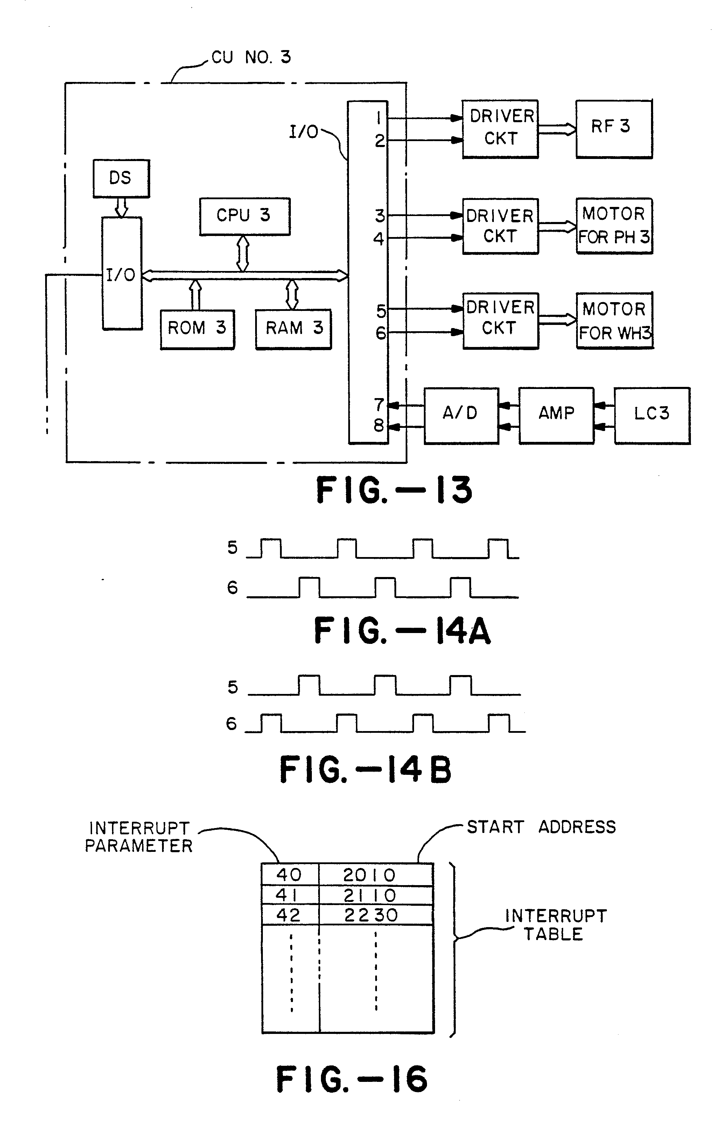

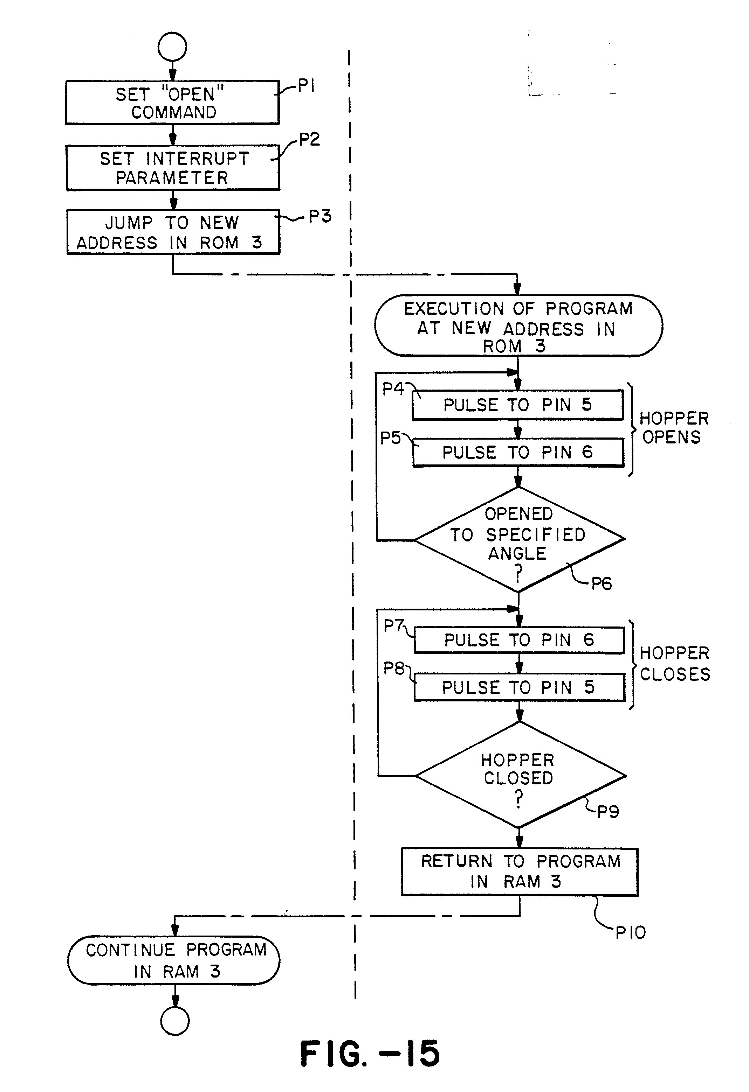

Fig. 13 is a more detailed block diagram of the third computer unit (CU No. 3) of Fig. 6 for controlling one of eighteen identically structured article batch handling units. As disclosed in the aforementioned EP-A-0219347 each hopper of the article batch handling units is operated by a stepping motor such that hopper gates open if the controlling motor rotates in one direction and close if the motor rotates in the reverse direction. Rotary motion of each motor in two directions is controlled by two signals transmitted to a driver circuit associated with the motor as shown. Let us consider the motor for the weigh hopper, for example, and assume that the motor turns in positive direction if a signal is transmitted from the fifth pin first, followed by another signal from the sixth pin as shown in Fig. 14(A) but it turns in the reverse (negative) direction if a signal is transmitted first from the sixth pin, followed by another signal from the fifth pin as shown in Fig. 14(B). Under these conditions, let us consider a program for transmitting signals from the fifth and sixth pins to open and close the weigh hopper gate. Fig. 15 is a flow chart of this program, showing Step S309 of Fig. 9 more in detail according to this particular embodiment of the present invention. Fig. 16 shows an illustrative interrupt table for the program. With reference both to Figs. 15 and 16, a command to open the (weigh) hopper is set in RAM3 (P1) at the beginning of Step S309 and interrupt parameter "41" responding to this command is set in the next step (P2). Next, the start address "2110" in the program stored in ROM3 to which the program jumps is obtained from the interrupt table of Fig. 16 corresponding to the interrupt parameter "41". The program then jumps to this address and CPU3 thereafter executes the program at address "2110" in ROM3.

According to this program in ROM3, a pulse signal is transmitted first to the fifth pin (P4) and then to the sixth pin (P5). This is repeated until it is detected that the hopper has opened to a specified angular position (P6). Step P6 may be carried out illustratively by counting the number of output pulses and checking if it has reached a specified total number. Thereafter, Steps P4 and P5 are repeated in reverse order (P7 and P8) to transmit signals as shown in Fig. 14(B). As soon as it is detected by counting pulses, for example, that the hopper has been closed (YES in $P_9$), CPU3 returns to the next address in the interrupted program in RAM3 ($P_{10}$) and resumes its execution.

With reference to Fig. 15, it is to be noted that Steps $P_4$ through $P_{10}$ on the right-hand side of the dotted line at the center are directly related to hardware (such as motor driver circuit and the input-output interface) and that the program for their operations is stored separately (in ROM3) from the program (in RAM3) for the other steps $P_1$ through $P_3$ which are not directly related to hardwares. Other programs of the system operation directly related to hardware such as those for Steps $S_{310}$, $S_{311}$ and $S_{306}$ of Fig. 9 are likewise separated from not directly related programs. Although separation is between a ROM and RAM according to the illustrative example described above, this is not intended to be limitative. The two types of programs may be stored in two separate RAMs or ROMs.

With a large-scale system containing a large number of CPUs, computer units are dispersed and so are their ROMs as shown in Fig. 3. When a program for a conventional system of this type is changed, all ROMs in the system must be redesigned and it sometimes becomes necessary to disassemble the hardware components.

However, it suffices, even in such a situation, to modify only a part of the overall program. In other words, programs for individual units can be changed automatically if a change is effected only in a basic ROM or if a new program is entered from an external memory means such as a memory card. Thus, another advantage is that a large number of programs can be operated by a system without requiring extremely large ROMs. While a conventional system requires a large number of ROMs in order to store many programs, a system as described above stores a program in a RAM. Thus, a large number of programs can be made available with a relatively few RAMs.

When a new weighing system with different hardware is developed, furthermore, it will be sufficient to newly develop only those programs directly related to hardware according to the present invention. Programs not directly related to hardware need not be developed anew because those for the original system are usable without changes. If a program not directly related to hardware is changed, on the other hand, it is frequently the case with conventional systems that programs directly related must also be changed. This is not the case with systems as described above because programs directly related to hardware are separately prepared.

## Claims

1. A weighing system comprising a plurality of weighing devices, characterised by a plurality of computer units respectively associated with said weighing devices, each of said computer units including a central processing unit (CPU), read-only memory means (ROM) and read-write memory menas (RAM), said read-only memory means (ROM) containing an operating system program which causes said central processing unit (CPU) to receive and store in said read-write memory means (RAM) processing programs and parameters and to control corresponding ones of said weighing devices by carrying out said processing programs with said parameters.

2. A system as claimed in Claim 1, characterised by a main computer unit which includes a program-storing memory means containing said processing programs.

3. A system as claimed in Claim 2, characterised in that said main computer unit includes input means for receiving programs and parameters from an external memory medium.

4. A system as claimed in any preceding claim, characterised by a communication line to which all of said computer units are connected.

5. A system as claimed in any preceding claim, characterised in that said weighing devices are parts of article batch handling units of a combinational weighing system, each of said article batch handling units including a feeder to transport articles to be weighed and hoppers for temporarily holding, weighing and discharging an article batch.

6. A system as claimed in Claim 5, characterised by a dispersion feeder for supplying said articles to be weighed to said article batch handling units, one of said computer units serving to control said dispersion feeder.

7. A system as claimed in Claim 5 or Claim 6, characterised by a discharge unit with intermediate hoppers and timing hoppers, one or more of said computer units serving to control said intermediate hoppers and said timing hoppers.

8. A system as claimed in any preceding claim, characterised in that said weighing devices include hardware components, and said read-only memory means stores hardware-related programs directly related to said hardware components.

9. A system as claimed in Claim 8, characterised in that said operating system program causes said central processing unit to jump from one of said processing programs to one of said hardware-related programs by an interrupt.

10. A weighing system comprising a weighing device, a computer which controls the operation of said weighing device and receives signals from said weighing device, and memory means storing programs for said computer, characterised in that said memory means includes first memory means which stores programs directly related to hardware components of said system, and second memory means which stores programs not directly related to said hardware components.

11. A system as claimed in Claim 10, characterised in that said first memory means includes a read-only memory.

12. A system as claimed in Claim 10 or Claim 11, characterised in that said second memory means includes a read-write memory means.

CPU    ROM    RAM

BUS LINE

I/O

COMPUTER SYSTEM

APPARATUS

(PRIOR ART)

# FIG. −1

PROGRAM (ASSEMBLER)

PROGRAM (MACHINE L)

PROGRAM (EXECUTABLE)

EPROM

EPROM

PROGRAM (ASSEMBLER)

PROGRAM (MACHINE L)

EPROM

LINKAGE

WRITE

PROGRAM DEVELOPMENT

WRITING

PROGRAM DEVELOPMENT SUPPORT

(PRIOR ART)

# FIG. −2

FIG. —3 (PRIOR ART)

BUS LINE

0 267 663

## FIG.-4A

```
        ┌──────────────┐
        │    CPU  I     │
        └──────┬───────┘
               │
        ┌──────▼───────┐
        │  PROGRAM  IN  │
        │    ROM  I     │
        └──────┬───────┘
               │
        ┌──────▼───────┐
        │  CLEAR  RAM I │
        └──────┬───────┘
               │
        ┌──────▼───────┐
        │ STORE PARAMETERS │
        │ IN RAM 2, RAM 3  │
        └──────┬───────┘
               │
        ┌──────▼───────┐
        │ STORE CONDITIONS │
        │   IN RAM I    │
        └──────┬───────┘
               │
          ◄────┤
        ╱──────▼───────╲
       ◄   TIMING       ╲
        ╲   SIGNAL      ╱
         ╲     ?       ╱
          ╲──────┬───╱
               │ 
        ┌──────▼───────┐
        │ READ  WEIGHTS │
        │ FROM  RAM 2   │
        └──────┬───────┘
               │
        ┌──────▼───────┐
        │ COMBINATIONAL │
        │ CALCULATION   │
        └──────┬───────┘
               │
        ┌──────▼───────┐
        │ STORE COMBINATION │
        │   IN  RAM 3    │
        └──────────────┘
```

(PRIOR ART)

**FIG.—4A**

## FIG.-4B

```
        ┌──────────────┐
        │    CPU  2     │
        └──────┬───────┘
               │
        ┌──────▼───────┐
        │  PROGRAM IN   │
        │    ROM 2      │
        └──────┬───────┘
               │
          ┌────▼────╲
   NO ◄───  PARAMETERS  ╲
          ╲ IN RAM 2 ?  ╱
           ╲────┬──────╱
                │ YES
        ┌───────▼──────┐
        │ ENTER AND STORE │
        │ WEIGHTS IN RAM 2 │
        └──────────────┘
```

(PRIOR ART)

**FIG.—4B**

## FIG.-4C

```
        ┌──────────────┐
        │    CPU  3     │
        └──────┬───────┘
               │
        ┌──────▼───────┐
        │  PROGRAM IN   │
        │    ROM 3      │
        └──────┬───────┘
               │
          ┌────▼────╲
   NO ◄───  PARAMETERS  ╲
          ╲ IN RAM 3 ?  ╱
           ╲────┬──────╱
                │ YES
          ┌─────▼────╲
   NO ◄───  COMBINATION ╲
          ╲ IN RAM 3 ?  ╱
           ╲────┬──────╱
                │ YES
        ┌───────▼──────┐
        │ COMMANDS TO   │
        │ DATA  BUS     │
        └──────────────┘
```

(PRIOR ART)

**FIG.—4C**

FIG. -5

FIG. -12

# FIG. — 6

CU NO. 2

DS · CPU 2 · I/O · I/O · DF · ROM 2 · RAM 2

MEMORY CARD · TOUCH SCREEN · DEU

CU NO. 3 · RF1 · PH1 · WH1 · DS · CPU 3 · I/O · I/O · ROM 3 · RAM 3 · A/D LC1

RF18 · PH18 · WH18 · DS · CPU 20 · I/O · I/O · ROM 20 · RAM 20 · A/D LC18

I/O · CPU 0 · I/O · CPU 1 · I/O · ROM 0 · RAM 1 · ROM 1 · RAM 1 · COMMUNICATION LINE

ROM P

CU NO 0 (MAIN)

CU NO. 1

DS · CPU 21 · I/O · I/O · ROM 21 · RAM 21 · IH 1 · IH 2 · IH 3 · CU NO. 21

DS · CPU 22 · I/O · I/O · ROM 22 · RAM 22 · TH 1 · TH 2 · CU NO. 22

0 267 663

```
                    ( CPU 0 )
                        │
          ┌─────────────────────────┐
          │   EXECUTION PROGRAM     │
          │      IN ROM 0           │
          └─────────────────────────┘
                        │
          ┌─────────────────────────┐ ── S1
          │   CHECK AND CLEAR       │
          │     RAM 0, I/O          │
          └─────────────────────────┘
                        │
          ┌─────────────────────────┐ ── S2
          │  PROGRAM FOR CPU 0      │
          │  FROM ROM P TO RAM 0    │
          └─────────────────────────┘
                        │
          ┌─────────────────────────┐
          │  EXECUTION OF PROGRAM   │
          │      IN RAM 0           │
          └─────────────────────────┘
                        │
                       (A)
```

S3 — COMMAND RECEIVED? NO / YES

S4 — TO SET CONDITIONS? YES / NO

S5 — MEMORY CARD SET? NO / YES

S6 — READ CONDITIONS FROM MEMORY CARD AND STORE IN RAM 1 → A

S7 — START WEIGHING? → S8 SEND START COMMAND TO CPU 1 → A / NO

S9 — TO STORE SUMMARY DATA? NO

S10 — MEMORY CARD SET? NO / YES

S11 — READ SUMMARY DATA FROM RAM 1 AND STORE IN MEMORY CARD → A

S12 — MAINTENANCE? NO

S13 — MEMORY CARD SET?

S14 — READ MAINTENANCE PROGRAM FROM MEMORY CARD AND STORE IN RAM 0

S15 — EXECUTION OF PROGRAM IN RAM 0

MAINTENANCE COMMAND TO CPU 1

# FIG. — 7

0 267 663

```
                    ┌──────────────┐
                    │    CPU 1     │
                    └──────┬───────┘
                    ┌──────┴───────┐
                    │ EXECUTION OF PROGRAM │
                    │     IN ROM 1        │
                    └──────┬───────┘
         ┌──────────────────────┐
         │   CHECK AND CLEAR     │──── S100
         │     RAM 1, I/O        │
         └──────────┬───────────┘
         ┌──────────────────────┐
         │   PROGRAM OF CPU 1    │──── S101
         │  FROM ROM P TO RAM 1  │
         └──────────┬───────────┘
         ┌──────────────────────┐
         │ EXECUTION OF PROGRAM  │
         │     IN RAM 1          │
         └──────────┬───────────┘
         ┌──────────────────────┐
         │  PROGRAM FOR CPU 2-   │──── S102
         │ CPU 22 FROM ROM P     │
         │      TO LINE          │
         └──────────┬───────────┘
```

S103 — COMMAND AND CPU 0 ? — NO

S104 — START WEIGHING ? — YES / NO

S111 — MAINTENANCE ? — YES / NO

S105 — TIMING SIGNAL ? — NO / YES

S106 — SEND COMMAND FOR WEIGHT DATA

S107 — ENTER WEIGHTS FROM CPU 3-CPU 20

S108 — COMBINATIONAL CALCULATION

S109 — OUTPUT COMMANDS AND PARAMETERS TO LINE

S110 — COMMAND FROM CPU 0 ? — NO / YES

S112 — READ MAINTENANCE PROGRAM FROM ROM 0 AND STORE IN RAM 1

EXECUTION OF PROGRAM IN RAM 1

S113 — READ MAINTENANCE PROGRAM FROM ROM 0 AND OUTPUT TO LINE

FIG. — 8

```
                    ┌─────────────┐
                    │   CPU  3    │
                    └──────┬──────┘
                           ▼
              ╭────────────────────────╮
              │  EXECUTION  OF  PROGRAM │
              │       IN  ROM  3        │
              ╰────────────┬───────────╯
                           ▼
              ┌─────────────────────┐        S300
              │  CHECK AND  CLEAR   │───────
              │  RAM 3 AND  I/O     │
              └──────────┬──────────┘
          ┌──────────────┤
          │              ▼                    S301
          │        ╱◇◇◇◇◇◇◇◇◇◇╲──────
      NO  │      ◇   PROGRAM    ◇
          └─────◇    INPUT      ◇
                  ◇     ?      ◇
                    ╲◇◇◇◇◇◇◇◇╱
                        │
                        ▼                       S302
              ┌─────────────────────┐──────
              │  ENTER PROGRAM AND  │
              │  STORE IN RAM 3     │
              └──────────┬──────────┘
                         ▼
              ╭────────────────────────╮
              │  EXECUTION  OF  PROGRAM │
              │       IN  RAM  3        │
              ╰────────────┬───────────╯
```

FIG.-9

0 267 663

MEMORY CARD

CR/W

| HOST | AC | ← | TELEPHONE LINE | → | AC | MAIN SCALE | | SCALE | | SCALE | | SCALE |

COMMUNICATION LINE

# FIG. —11

MEMORY CARD

CR/W

| HOST | AC | ← | TELEPHONE LINE | → | AC | MAIN CWS | PU | | CWS | PU | | WEIGHT CHECKER |

COMMUNICATION LINE

| CWS | PU | | CWS | PU | | WEIGHT CHECKER |

# FIG. —10

CU NO. 3

I/O

DS

CPU 3

I/O

ROM 3    RAM 3

I/O

1
2    DRIVER CKT    RF 3

3
4    DRIVER CKT    MOTOR FOR PH 3

5
6    DRIVER CKT    MOTOR FOR WH3

7
8    A/D    AMP    LC3

# FIG.—13

5

6

# FIG.—14A

5

6

# FIG.—14B

INTERRUPT PARAMETER

START ADDRESS

| 40 | 2010 |
| 41 | 2110 |
| 42 | 2230 |
| | |

INTERRUPT TABLE

# FIG.—16

SET "OPEN" COMMAND — P1

SET INTERRUPT PARAMETER — P2

JUMP TO NEW ADDRESS IN ROM 3 — P3

EXECUTION OF PROGRAM AT NEW ADDRESS IN ROM 3

P4 — PULSE TO PIN 5

P5 — PULSE TO PIN 6

} HOPPER OPENS

OPENED TO SPECIFIED ANGLE ? — P6

P7 — PULSE TO PIN 6

P8 — PULSE TO PIN 5

} HOPPER CLOSES

HOPPER CLOSED ? — P9

RETURN TO PROGRAM IN RAM 3 — P10

CONTINUE PROGRAM IN RAM 3

# FIG. -15